# EUROPEAN PATENT APPLICATION

(11) **EP 4 796 248 A1**
(43) Date of publication of application: **26.08.2026**
(21) Application number: 24916874.1
(22) Date of filing: 18.12.2024
(51) Int. Cl.: B23C 5/10

(54) **END MILL**

(30) Priority: 12.01.2024 JP 2024003342
(71) Applicant: Moldino Tool Engineering, Ltd., Tokyo 130-0026 (JP)
(72) Inventor: TAMAKI, Kenshiro, Yasu-shi, Shiga 520-2323 (JP); TANAKA, Hiroaki, Yasu-shi, Shiga 520-2323 (JP)
(74) Representative: Hoffmann Eitle
(86) International application number: PCT/JP2024/044776
(87) International publication number: WO 2025/150371

(57) **Abstract**

An end mill (1) extends along a central axis (C) in an axial direction. The end mill (1) has a cutting edge portion (3) on a tip side of the end mill (1). The cutting edge portion (3) has four or more sets of cutting edges (7) around the central axis (C). The rotation trajectory of the cutting edges (7) around the central axis (C) has a diameter dimension (D) of 3 mm or less. The radially inner end of a bottom cutting edge (71) is disposed away from the central axis (C) in a radial direction. The rotation trajectory of the bottom cutting edge (71) around the central axis (C) has a curved shape that is convex toward the tip side in a longitudinal cross-sectional view along the central axis (C), and in this longitudinal cross-sectional view, the radius of curvature (R) of the convex curve formed by the rotation trajectory of the bottom cutting edge (71) is larger than the diameter dimension (D). A chip removal groove (4) has a groove transition portion (10) located at the boundary between a posterior end portion of the chip removal groove (4) and a peripheral surface (3b) of the cutting edge portion (3) and extending linearly. The ratio (L/D) between the diameter dimension (D) and the axial dimension (L) between the tip of the bottom cutting edge (71) and the posterior end of the chip removal groove (4) is 2.0 or less.

## Description

### TECHNICAL FIELD

The present invention relates to an end mill.

Priority is claimed on Japanese Patent Application No. 2024-003342, filed January 12, 2024, the content of which is incorporated herein by reference.

### BACKGROUND ART

Conventionally, end mills are known that include a cutting edge portion and a shank disposed on the posterior end side of the cutting edge portion, and extend in an axial direction along a central axis. Patent Document 1 discloses a small-diameter end mill in which a maximum outer diameter of a cutting edge portion (that is, a cutting edge diameter dimension) is formed to, for example, 6 mm or less.

### Citation List

### Patent Document

Patent Document 1: Japanese Unexamined Patent Application, First Publication No. 2018-192566

### SUMMARY OF INVENTION

### Technical Problem

With conventional small-diameter end mills, it has been difficult to meet the demand for improved machining efficiency while maintaining rigidity, especially when a diameter dimension of the cutting edge portion (a cutting edge diameter dimension) is reduced to 3 mm or less. For example, when a work material with high hardness, such as high-hardness steel, is cut, it has been difficult to achieve both ensuring of rigidity and improvement in machining efficiency.

An object of the present invention is to provide an end mill capable of improving machining efficiency while having a small diameter and increased rigidity. Solution to Problem

In order to solve the above problems, the present invention provides the following means.

### [First aspect of the present invention]

There is provided an end mill which extends along a central axis in an axial direction, wherein the end mill has a cutting edge portion on a tip side of the end mill, the cutting edge portion has a chip removal groove configured to extend from a tip surface of the cutting edge portion toward a posterior end side in a direction opposite to an end mill rotation direction around the central axis, a bottom cutting edge disposed on a ridge portion in which a wall surface of the chip removal groove that faces the end mill rotation direction and the tip surface of the cutting edge portion are connected, a peripheral cutting edge disposed on a ridge portion in which the wall surface and a peripheral surface of the cutting edge portion are connected, and a corner cutting edge having a convex curved shape and configured to connect the bottom cutting edge and the peripheral cutting edge, four or more sets of cutting edges, each including the bottom cutting edge, the peripheral cutting edge, and the corner cutting edge, are provided at intervals around the central axis, a diameter dimension D of a rotation trajectory of the cutting edge around the central axis is 3 mm or less, a radially inner end of the bottom cutting edge is disposed away from the central axis in a radial direction, a rotation trajectory of the bottom cutting edge around the central axis has a curved shape that is convex toward a tip side in a longitudinal cross section view along the central axis, in the longitudinal cross-sectional view, a radius of curvature R of the convex curve formed by the rotation trajectory of the bottom cutting edge is larger than the diameter dimension D, the chip removal groove has a groove transition portion that is located at a boundary between a posterior end portion of the chip removal groove and a peripheral surface of the cutting edge portion and extends linearly, and a ratio L/D of an axial dimension L between a tip of the bottom cutting edge and the posterior end of the chip removal groove to the diameter dimension D is 2.0 or less.

### [Second aspect of the present invention]

In the end mill according to the first aspect, the groove transition portion may extend substantially parallel to the central axis.

### [Third aspect of the present invention]

In the end mill according to the first or second aspect, the chip removal groove may have a first concave curved surface portion that has a concave curved shape extending in the end mill rotation direction as the concave curved shape progresses toward a radially inner side from the peripheral cutting edge, in a transverse cross-sectional view perpendicular to the central axis, a convex curved surface portion that is connected to an end portion of the first concave curved surface portion in the end mill rotation direction and has a convex curved shape extending in the end mill rotation direction, in the transverse cross-sectional view, and a second concave curved surface portion that is connected to an end portion of the convex curved surface portion in the end mill rotation direction and has a concave curved shape extending toward a radially outer side as the concave curved shape progresses in the end mill rotation direction, in the transverse cross-sectional view.

### [Fourth aspect of the present invention]

In the end mill according to the third aspect, in the transverse cross-sectional view, a radius of curvature of the convex curved surface portion may be larger than a radius of curvature of the first concave curved surface portion and may also be larger than a radius of curvature of the second concave curved surface portion.

### [Fifth aspect of the present invention]

In the end mill according to the third or fourth aspect, in a case where a maximum amount of protrusion of the convex curved surface portion that protrudes from an imaginary line connecting radially inner ends of the first concave curved surface portion and the second concave curved surface portion in a direction perpendicular to the imaginary line is defined as h in the transverse cross-sectional view, a ratio (h/D) of the maximum amount of protrusion h to the diameter dimension D may be 1% or more and 12% or less.

### [Sixth aspect of the present invention]

In the end mill according to any one of the first to fifth aspects, the chip removal groove may have a groove-shaped gashes disposed adjacent to the bottom cutting edge in the end mill rotation direction of the bottom cutting edge, a number of the gashes may be four or more which is the same as a number of the bottom cutting edges, and radially inner end portions of each of the gashes may be connected to each other on the central axis.

### [Seventh aspect of the present invention]

In the end mill according to any one of the first to sixth aspects, the end mill may further include a shank disposed on a posterior end side of the cutting edge portion, a diameter dimension of the shank may be larger than the diameter dimension D, and a ratio M/D of an axial dimension M from a tip of the shank to a tip of the cutting edge portion to the diameter dimension D may be 10 or less.

### [Eighth aspect of the present invention]

In the end mill according to any one of the first to seventh aspects, four or more peripheral cutting edges may be provided, the four or more peripheral cutting edges may include main peripheral cutting edges located radially outermost among the peripheral cutting edges, and sub-peripheral cutting edges disposed radially inward with respect to the main peripheral cutting edge, and the main peripheral cutting edges and the sub-peripheral cutting edges may be disposed alternately around the central axis.

### [Ninth aspect of the present invention]

In the end mill according to the eighth aspect, a diameter dimension of a rotation trajectory of the main peripheral cutting edges around the central axis may be the diameter dimension D, and a difference (D-d) between the diameter dimension D and a diameter dimension d of a rotation trajectory of the sub-peripheral cutting edge around the central axis may be 0.04 times or less the diameter dimension D.

### [Tenth aspect of the present invention]

In the end mill according to any one of the first to ninth aspects, a rake angle of the peripheral cutting edge may be a negative angle, and a rake angle of the bottom cutting edge may be a negative angle.

### [Eleventh aspect of the present invention]

In the end mill according to the tenth aspect, the rake angle of each of the peripheral cutting edge and the bottom cutting edge may be -30° or more and -10° or less.

### [Twelfth aspect of the present invention]

There is provided an end mill which extends along a central axis in an axial direction, wherein the end mill has a cutting edge portion on a tip side of the end mill, the cutting edge portion has a chip removal groove configured to extend from a tip surface of the cutting edge portion toward a posterior end side in a direction opposite to an end mill rotation direction around the central axis, a bottom cutting edge disposed on a ridge portion in which a wall surface of the chip removal groove that faces the end mill rotation direction and the tip surface of the cutting edge portion are connected, a peripheral cutting edge disposed on a ridge portion in which the wall surface and a peripheral surface of the cutting edge portion are connected, and a corner cutting edge having a convex curved shape and configured to connect the bottom cutting edge and the peripheral cutting edge, three sets of cutting edges, each including the bottom cutting edge, the peripheral cutting edge, and the corner cutting edge, are provided at intervals around the central axis, a diameter dimension D of a rotation trajectory of the cutting edge around the central axis is 3 mm or less, a radially inner end of the bottom cutting edge is disposed away from the central axis in a radial direction, a rotation trajectory of the bottom cutting edge around the central axis has a curved shape that is convex toward a tip side in a longitudinal cross section view along the central axis, in the longitudinal cross-sectional view, a radius of curvature R of the convex curve formed by the rotation trajectory of the bottom cutting edge is larger than the diameter dimension D, the chip removal groove has a groove transition portion that is located at a boundary between a posterior end portion of the chip removal groove and a peripheral surface of the cutting edge portion and extends linearly, and a ratio L/D of an axial dimension L between a tip of the bottom cutting edge and the posterior end of the chip removal groove to the diameter dimension D is 2.0 or less.

### Advantageous Effects of Invention

According to the above aspects of the present invention, it is possible to provide an end mill capable of improving machining efficiency while having a small diameter and increased rigidity.

### BRIEF DESCRIPTION OF DRAWINGS

[FIG. 1] A side view showing an end mill according to an embodiment, and showing a simplified portion (a cutting edge portion) thereof.
[FIG. 2] A side view showing the cutting edge portion of the end mill.
[FIG. 3] A cross-sectional view (a longitudinal cross-sectional view) simply showing a rotation trajectory obtained by rotating the cutting edge portion around a central axis as a cross section along the central axis, and for the sake of convenience, differences in a radial position of each peripheral cutting edge are emphasized so that they can be easily understood. Also, corner cutting edges are not shown.
[FIG. 4] A front view of the cutting edge portion when seen from the tip side.
[FIG. 5] A cross-sectional view (a transverse cross-sectional view) showing the cutting edge portion as a cross section perpendicular to the central axis.
[FIG. 6] A cross-sectional view (a transverse cross-sectional view) showing a cutting edge portion of an end mill according to a modified example according to the embodiment as a cross section perpendicular to the central axis.

### DESCRIPTION OF EMBODIMENTS

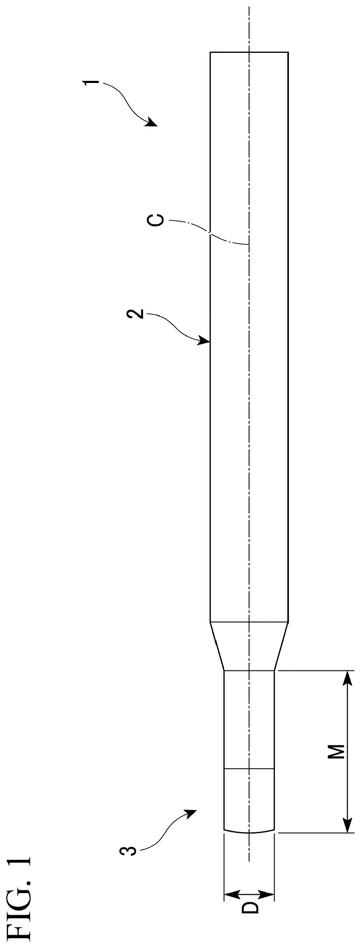

An end mill 1 according to one embodiment of the present invention will be described with reference to FIGS. 1 to 5. The end mill 1 according to the embodiment is a cutting tool (a milling tool) that performs milling on a work material such as a metal. Specifically, the end mill 1 according to the embodiment is a radius end mill suitable for milling a work material with high hardness, such as high-hardness steel.

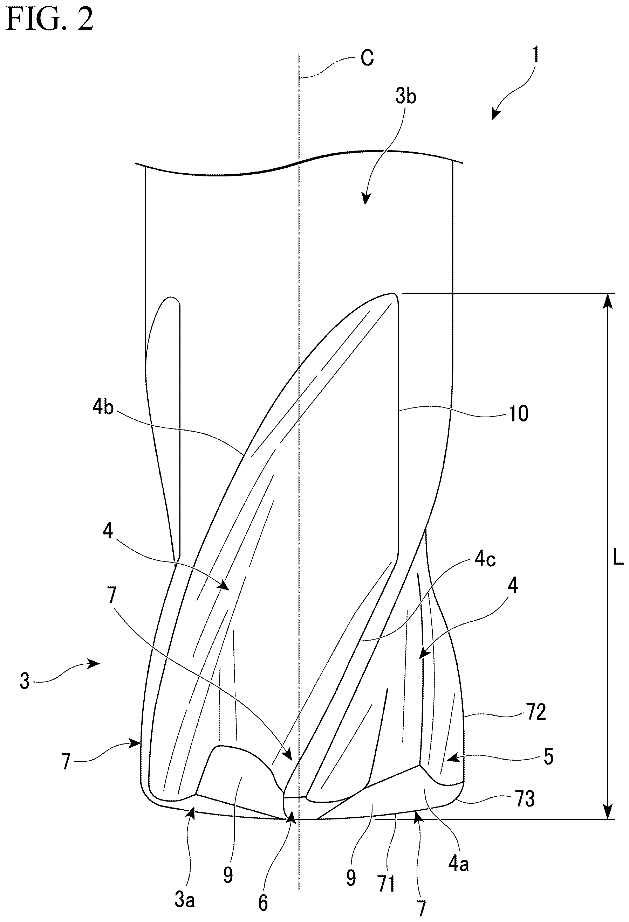

As shown in FIGS. 1 and 2, the end mill 1 has a columnar shape centered on a central axis C. The end mill 1 has a shank 2 and a cutting edge portion 3. **In** FIG. 1, the cutting edge portion 3 is shown in a simplified manner.

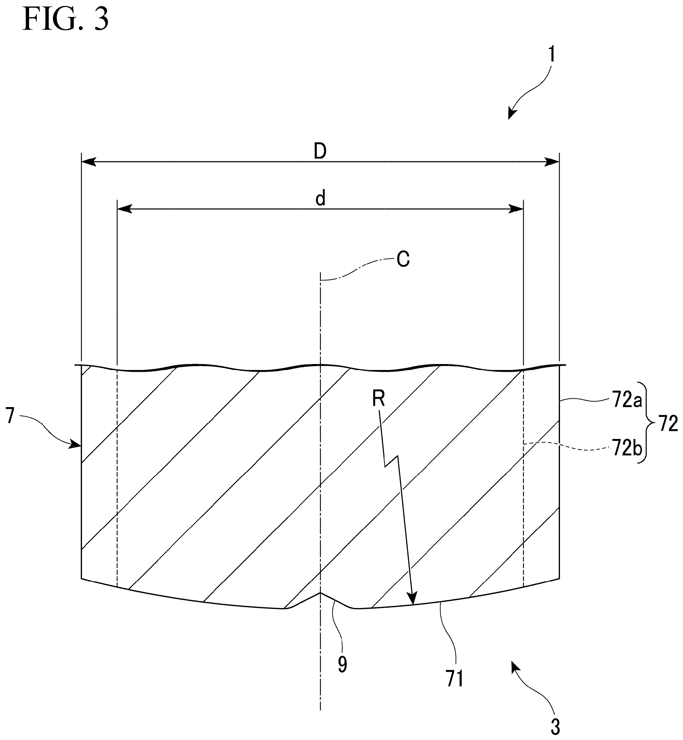

FIG. 3 is a cross-sectional view (a longitudinal cross-sectional view) simply showing a rotation trajectory obtained by rotating the cutting edge portion 3 around the central axis C, as a cross section along the central axis C. In FIG. 3, a diameter dimension (an outer diameter dimension) D of the cutting edge portion 3, that is, a cutting edge diameter dimension D, is, for example, 3 mm or less. The diameter dimension D of the cutting edge portion 3 may be 2 mm or less, or may be 1 mm or less. In the embodiment, the diameter dimension D of the cutting edge portion 3 is set to a predetermined value in a range of, for example, 0.5 mm or more to 0.8 mm or less. The end mill 1 according to the embodiment may be referred to as a small-diameter end mill of the like because the diameter dimension D of the cutting edge portion 3 is made small.

As shown in FIG. 1, the shank 2 and the cutting edge portion 3 are disposed coaxially with the central axis C as a common axis. Furthermore, the shank 2 and the cutting edge portion 3 are disposed at different positions from each other in a direction in which the central axis C extends.

In the embodiment, the direction in which the central axis C of the end mill 1 extends is referred to as an axial direction. The end mill 1 extends in the axial direction along the central axis C. In the axial direction, a direction from the shank 2 toward the cutting edge portion 3 is referred to as the tip side in the axial direction or simply the tip side, and a direction from the cutting edge portion 3 toward the shank 2 is referred to as the posterior end side in the axial direction or simply the posterior end side.

A direction perpendicular to the central axis C is referred to as a radial direction. In the radial direction, a direction approaching the central axis C is referred to as the radially inner side, and a direction away from the central axis C is referred to as the radially outer side.

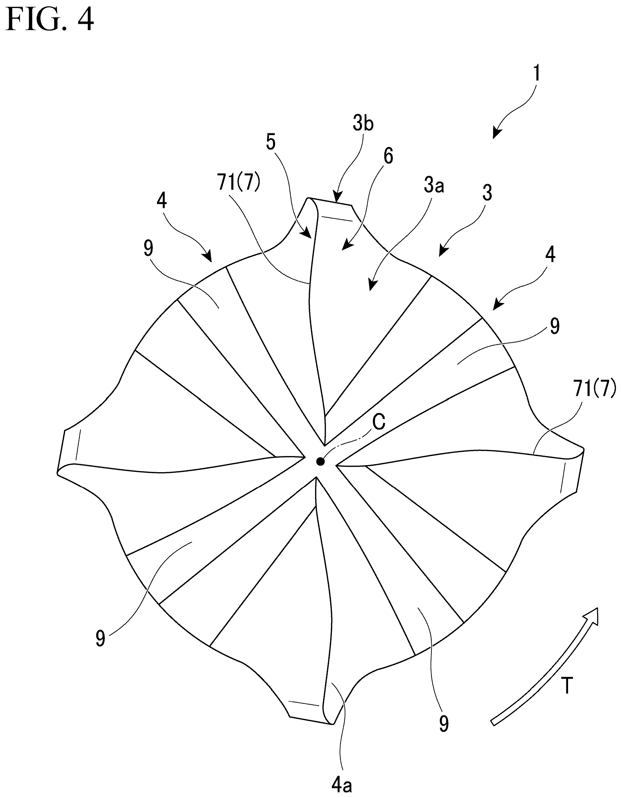

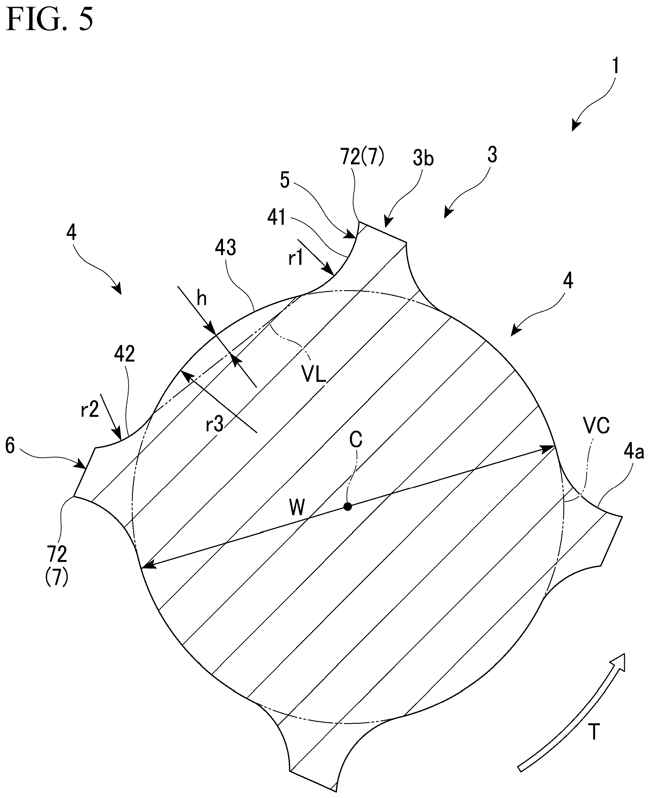

Further, a direction of rotation around the central axis C is referred to as a circumferential direction. In the circumferential direction, a direction in which the end mill 1 is rotated during cutting is referred to as an end mill rotation direction T, and a rotation direction opposite thereto is referred to as the side opposite to the end mill rotation direction T or a counter end mill rotation direction (refer to FIGS. 4 and 5).

As shown in FIG. 1, the shank 2 has a cylindrical shape that extends in the axial direction around the central axis C. The shank 2 is disposed on the posterior end side of the cutting edge portion 3. A diameter dimension of the shank 2 is larger than the diameter dimension (the cutting edge diameter dimension) D of the cutting edge portion 3. A tip end portion of the shank 2 is tapered so that the diameter dimension decreases (contracts) toward the tip side. In the embodiment, M/D which is a ratio of an axial dimension M from the tip of the shank 2 to the tip of the cutting edge portion 3 to the diameter dimension D is, for example, 10 or less. Preferably, M/D is 8 or less, and more preferably 5 or less. The axial dimension M may also be referred to as an under-head length or the like.

The shank 2 is detachably held on a spindle or the like (hereinafter, may be abbreviated as a spindle or the like) of a machine tool (not shown). The shank 2 is rotated in the end mill rotation direction T by the spindle or the like, and is moved in the radial direction or the axial directions relative to a work material (not shown). As a result, the end mill 1 cuts into the work material with a cutting edge 7 (a bottom cutting edge 71, a peripheral cutting edge 72, and a corner cutting edge 73) of the cutting edge portion 3, which will be described below, to perform milling.

The diameter dimension (the cutting edge diameter dimension) D of the cutting edge portion 3 described above corresponds to a diameter dimension of the rotation trajectory around the central axis C of the cutting edge 7, and more specifically, corresponds to the diameter dimension of the rotation trajectory around the central axis C of the peripheral cutting edge 72.

The cutting edge portion 3 is disposed on the tip side (the tip end portion) of the end mill 1. The cutting edge portion 3 has a substantially cylindrical shape that extends in the axial direction along the central axis C. As shown in FIGS. 2 to 5, the cutting edge portion 3 has a chip removal groove 4, a rake face 5, a flank face 6, and the cutting edge 7.

The chip removal groove 4 has a groove shape that opens to a tip surface 3a that faces the tip side of the cutting edge portion 3 in the axial direction and to a peripheral surface 3b that faces the radially outer side. The chip removal groove 4 extends from the tip surface 3a of the cutting edge portion 3 toward the posterior end side, in a direction opposite to the end mill rotation direction T around the central axis C. A plurality of chip removal grooves 4 are provided at intervals in the circumferential direction in the cutting edge portion 3. In the embodiment, four or more chip removal grooves 4 are provided at equal or unequal pitches in the circumferential direction.

The chip removal groove 4 has a gash 9 disposed at the tip end portion of the chip removal groove 4. The gash 9 constitutes part (the tip end portion) of the chip removal groove 4. The gash 9 is a groove recessed from the tip surface 3a of the cutting edge portion 3 toward the posterior end side and extends generally in the radial direction. The gash 9 is disposed adjacent to the bottom cutting edge 71 in the end mill rotation direction T of the bottom cutting edge 71 which will be described below. In the embodiment, as shown in FIG. 4, a groove width dimension of the gash 9 increases as the gash progresses toward the radially outer side.

Further, as shown in FIG. 2, the chip removal groove 4 has a groove transition portion 10 disposed at the posterior end portion of the chip removal groove 4. The groove transition portion 10 is a ridge portion located at a boundary between the posterior end portion of the chip removal groove 4 and the peripheral surface 3b of the cutting edge portion 3, and extends linearly. More specifically, the groove transition portion 10 corresponds to a ridge portion that connects a posterior end of a first end edge 4b which is located in the end mill rotation direction T, and a posterior end of a second end edge 4c (corresponding to a peripheral cutting edge 72 described below) which is located in the opposite end mill rotation direction, among the two end edges (a pair of end edges) 4b and 4c of the chip removal groove 4 in a groove width direction. The groove transition portion 10 corresponds to what is called a "cutter sweep" by those skilled in the art.

In the embodiment, the groove transition portion 10 extends substantially parallel to the central axis C. That is, the groove transition portion 10 extends substantially along the axial direction. In the embodiment, the term "substantially parallel to the central axis C" means that, when the cutting edge portion 3 is seen from the radial direction perpendicular to the central axis C as shown in FIG. 2, an angle at which the groove transition portion 10 is inclined with respect to the central axis C is within ±3°, and preferably ±2° or less.

The chip removal groove 4 has a first concave curved surface portion 41, a convex curved surface portion 43, and a second concave curved surface portion 42. As shown in FIG. 5, the first concave curved surface portion 41, when seen in a transverse cross-sectional view perpendicular to the central axis C, has a concave curved shape that extends in the end mill rotation direction T as the concave curved shape progresses toward a radially inner side from the peripheral cutting edge 72 described below. In the transverse cross-sectional view, the convex curved surface portion 43 is connected to an end portion of the first concave curved surface portion 41 in the end mill rotation direction T, and has a convex curved shape that extends in the end mill rotation direction T. In the transverse cross-sectional view, the second concave curved surface portion 42 is connected to an end portion of the convex curved surface portion 43 in the end mill rotation direction T, and has a concave curved shape that extends toward the radially outer side in the end mill rotation direction T.

That is, the chip removal groove 4 has a pair of concave curved surface portions (the first concave curved surface portion and the second concave curved surface portion) 41 and 42 disposed at a distance from each other in the circumferential direction, and the convex curved surface portion 43 disposed between the pair of concave curved surface portions 41 and 42 in the circumferential direction. In the transverse cross-sectional view shown in FIG. 5, the pair of concave curved surface portions 41 and 42 each have a curved shape that is concave radially inward, and more specifically, have a concave arc shape. In addition, in the transverse cross-sectional view, the convex curved surface portion 43 has a curved shape that is convex toward the radially outer side, and more specifically, has a convex arc shape (an arc shape centered on the central axis C).

In the cross-sectional view of FIG. 5, the first concave curved surface portion 41 and the convex curved surface portion 43 are connected smoothly without any steps. Specifically, the first concave curved surface portion 41 and the convex curved surface portion 43 are formed continuously so that a connecting portion therebetween has a common tangent line.

In addition, in the transverse cross-sectional view, the convex curved surface portion 43 and the second concave curved surface portion 42 are connected smoothly without any steps. Specifically, the convex curved surface portion 43 and the second concave curved surface portion 42 are formed continuously so that a connecting portion therebetween has a common tangent line. Further, the second concave curved surface portion 42 is connected to a peripheral flank face (the flank face 6 ) described below, which is adjacent to the chip removal groove 4 in the end mill rotation direction T.

In the cross-sectional view shown in FIG. 5, a radius of curvature r3 of the convex curved surface portion 43 is larger than a radius of curvature r1 of the first concave curved surface portion 41 and is also larger than a radius of curvature r2 of the second concave curved surface portion 42. In the transverse cross-sectional view, a maximum amount of protrusion (a maximum protrusion dimension) of the convex curved surface portion 43 that protrudes from an imaginary line VL, which connects radially inner ends (deepest points) of the first concave curved surface portion 41 and the second concave curved surface portion 42, in a direction perpendicular to the imaginary line VL is defined as h. In the embodiment, a ratio (h/D) of the maximum amount of protrusion h to the diameter dimension (the cutting edge diameter dimension) D of the cutting edge portion 3 is set to, for example, 1% or more and 12% or less.

As shown in FIGS. 2, 4, and 5, the rake face 5 is disposed on a wall surface 4a of the chip removal groove 4 that faces the end mill rotation direction T. The rake face 5 has a tip rake face, a peripheral rake face, and a corner rake face. The tip rake face is disposed at a tip end portion of the wall surface 4a connected to the tip surface 3a of the cutting edge portion 3. The peripheral rake face is disposed at a radially outer end portion of the wall surface 4a connected to the peripheral surface 3b of the cutting edge portion 3. The corner rake face is disposed on the wall surface 4a between the radially outer end of the tip rake face and the tip end portion of the peripheral rake face.

At least part of the tip rake face and the corner rake face is disposed on a wall surface (a portion constituting the wall surface 4a) of the gash 9 that faces the end mill rotation direction T. Therefore, the tip rake face and the corner rake face may also be referred to as a gash rake face or the like.

The flank face 6 has a tip flank face disposed on the tip surface 3a of the cutting edge portion 3, a peripheral flank face disposed on the peripheral surface 3b of the cutting edge portion 3, and a corner flank face disposed between a radial outer end portion of the tip flank face and a tip end portion of the peripheral flank face.

The tip flank face is disposed between the adjacent chip removal grooves 4 (the gash 9) in the circumferential direction on the tip surface 3a of the cutting edge portion 3. The tip flank face is connected to the bottom cutting edge 71 (described below) of the cutting edge 7 and extends along the bottom cutting edge 71. The tip flank face extends toward the posterior end side in the axial direction as the tip flank face progresses from the bottom cutting edge 71 toward the side opposite to the end mill rotation direction T. Thus, the bottom cutting edge 71 is provided with a flank angle.

The outer circumferential flank face is disposed in the circumferential direction between adjacent chip removal grooves 4 in the outer circumferential surface 3b of the cutting edge portion 3. The outer circumferential flank face is connected to a peripheral cutting edge 72 (described below) of the cutting edge 7, and extends along the peripheral cutting edge 72. The peripheral flank face extends toward the radially inner side as peripheral flank face progresses from the peripheral cutting edge 72 toward the opposite side of the end mill rotation direction T. Thus, a flank angle is provided to the peripheral cutting edge 72.

The corner flank face is disposed at a corner portion at which the tip surface 3a and the peripheral surface 3b of the cutting edge portion 3 are connected. The corner flank face has a curved surface shape that is convex toward the peripheral side of the tip. The corner flank face is connected to the corner cutting edge 73 (described below) of the cutting edge 7 and extends along the corner cutting edge 73. The corner flank face extends axially toward the posterior end and the radially inner side as the corner flank face progresses from the corner cutting edge 73 to the side opposite to the end mill rotation direction T. Thus, a flank angle is provided to the corner cutting edge 73.

The cutting edge 7 has the bottom cutting edge 71, the peripheral cutting edge 72, and the corner cutting edge 73. The bottom cutting edge 71 is disposed on a ridge portion in which the wall surface 4a (that is, the rake face 5, the same applies below) of the chip removal groove 4, which faces the end mill rotation direction T, and the tip surface 3a of the cutting edge portion 3 are connected. The peripheral cutting edge 72 is disposed on a ridge portion in which the wall surface 4a and the peripheral surface 3b of the cutting edge portion 3 are connected. The corner cutting edge 73 connects the bottom cutting edge 71 and the peripheral cutting edge 72 and has a convex curved shape. That is, the cutting edge portion 3 has the bottom cutting edge 71, the peripheral cutting edge 72 , and the corner cutting edge 73.

A plurality of sets of cutting edges 7, each including the bottom cutting edge 71, the peripheral cutting edge 72, and the corner cutting edge 73, are provided at intervals around the central axis C. In the embodiment, four or more sets of cutting edges 7 are provided. That is, the end mill 1 is a multi-cutting edge end mill having four or more cutting edges. The plurality of cutting edges 7 are disposed at equal or unequal pitches in the circumferential direction around the central axis C.

The bottom cutting edge 71 is disposed on a ridge portion in which the tip rake face and the tip flank face are connected. The bottom cutting edge 71 extends in a substantially radial direction along a direction in which the gash 9 extends. In the embodiment, the number of the bottom cutting edges 71 is four or more, and the number of the gashes 9 is four or more, which is the same as the number of the bottom cutting edges 71. As shown in FIG. 4, the radially inner end portions of the gashes 9 are connected to each other on the central axis C. That is, the gashes 9 communicate with each other via the central axis C. The plurality of gashes 9 extend radially around the central axis C.

Specifically, as shown in FIG. 4, in a front view of the cutting edge portion 3 seen from the tip side, each of the bottom cutting edges 71 has a curved shape that is convex in the end mill rotation direction T. The radially inner end of each of the bottom cutting edges 71 is disposed radially away from the central axis C. That is, the radially inner end of the bottom cutting edge 71 is disposed radially outward with respect to the central axis C.

As shown in FIG. 3, the rotation trajectory of the bottom cutting edge 71 around the central axis C forms a curved shape that is convex toward the tip side in a longitudinal cross section along the central axis C. In the embodiment, in this longitudinal cross-sectional view, the radius of curvature R of the convex curve formed by the rotation trajectory of the bottom cutting edge 71 is larger than the diameter dimension (the cutting edge diameter dimension) D of the cutting edge portion 3. The radius of curvature R of the bottom cutting edge 71 is, for example, 1.05 times or more and 3 times or less the diameter dimension D of the cutting edge portion 3, and preferably 1.07 times or more and 2.0 times or less.

As shown in FIG. 2, in the embodiment, a ratio L/D of an axial dimension L between the tip of the bottom cutting edge 71 and the posterior end of the chip removal groove 4 to the diameter dimension D is, for example, 2.0 or less. Here, the "tip of the bottom cutting edge 71" refers to the most tip point of the bottom cutting edge 71 located at the most tip side. Also, the "posterior end of the chip removal groove 4" refers to a connection point at which the posterior end of the first end edge 4b of the chip removal groove 4 and the posterior end of the groove transition portion 10 are connected.

The peripheral cutting edge 72 is disposed on a ridge portion in which the peripheral rake face and the peripheral flank face are connected. The peripheral cutting edge 72 extends along the chip removal groove 4. Specifically, the peripheral cutting edge 72 extends in the direction opposite to the end mill rotation direction as the peripheral cutting edge 72 progresses toward the posterior end side in the axial direction. The peripheral cutting edge 72 is a cutting edge that is disposed radially outward among the cutting edges 7. Therefore, the diameter dimension D of the cutting edge portion 3 described above may also be rephrased as the diameter dimension D of the rotation trajectory of the peripheral cutting edge 72 around the central axis C.

In the embodiment, the plurality of peripheral cutting edges 72 are provided at intervals in the circumferential direction, and specifically, four or more peripheral cutting edges 72 are provided. As shown in FIG. 3, the four or more peripheral cutting edges 72 include a main peripheral cutting edge 72a that is located radially outermost among the peripheral cutting edges 72, and a sub-peripheral cutting edge 72b that is located radially inner than the main peripheral cutting edge 72a. A plurality of main peripheral cutting edges 72a are provided, specifically, two or more are provided, and a plurality of sub-peripheral cutting edges 72b are provided, specifically, two or more are provided. The main peripheral cutting edges 72a and the sub-peripheral cutting edges 72b are disposed alternately around the central axis C.

As shown in FIG. 3, the diameter dimension of the rotation trajectory of the main peripheral cutting edge 72a around the central axis C is the diameter dimension D described above. In the embodiment, a difference (D-d) between this diameter dimension D and a diameter dimension d of the rotation trajectory of the sub-peripheral cutting edge 72b around the central axis C is set to be 0.04 times or less the diameter dimension D.

As shown in FIG. 2, the corner cutting edge 73 is disposed on a ridge portion in which the corner rake face and the corner flank face are connected. The corner cutting edge 73 has a curved shape that is convex toward the peripheral side of the tip of the cutting edge portion 3. A radially inner end of the corner cutting edge 73 is connected to a radially outer end of the bottom cutting edge 71 to be in smooth contact with the radially inner end of the corner cutting edge 73. A posterior end of the corner cutting edge 73 is connected to a front end of the peripheral cutting edge 72 to be in smooth contact with the front end of the peripheral cutting edge 72.

In the embodiment, a rake angle of each of the bottom cutting edge 71, the peripheral cutting edge 72, and the corner cutting edge 73 is set to a negative angle. For example, the rake angles of the bottom cutting edge 71, the peripheral cutting edge 72, and the corner cutting edge 73 are each set to a range of -30° to -10°. Specifically, the rake angle of the bottom cutting edge 71 is, for example, an axial rake angle. Further, the rake angle of the peripheral cutting edge 72 is, for example, a radial rake angle.

The end mill 1 according to the embodiment described above is a small-diameter end mill in which the diameter dimension D of the rotation trajectory of the cutting edge 7, that is, the diameter dimension (the cutting edge diameter dimension) D of the cutting edge portion 3, is 3 mm or less, and the cutting edge portion 3 is particularly thin.

The end mill 1 according to the embodiment includes four or more sets of cutting edges 7, including the bottom cutting edges 71, the peripheral cutting edges 72, and the corner cutting edges 73. In other words, the end mill 1 is a multi-cutting edge end mill with four or more cutting edges. Furthermore, the convex curve obtained by cutting the rotation trajectory of the bottom cutting edge 71 with a longitudinal cross section (an imaginary plane including the central axis C) along the central axis C has a radius of curvature R that is larger than the diameter dimension D of the cutting edge portion 3. Thus, a thickness of chips generated by cutting with each of the bottom cutting edge 71 is reduced, thereby reducing cutting resistance.

As described above, since the end mill 1 includes the multiple cutting edges and the cutting resistance of each of the bottom cutting edges 71 is curbed, it is possible to perform a cutting operation by setting cutting conditions with high efficiency. Therefore, the end mill 1 according to the embodiment can improve machining efficiency.

Further, in this end mill 1, the ratio L/D, which is the ratio of an axial dimension L (corresponding to a total length dimension of the chip removal groove 4 in the axial direction) between the tip of the bottom cutting edge 71 and the posterior end of the chip removal groove 4 to the diameter dimension D, is kept small at 2.0 or less. It is possible to minimize an amount of thinning of the end mill 1 by providing the chip removal groove 4, thereby curbing a decrease in rigidity, while ensuring chip removal performance of the chip removal groove 4.

Furthermore, as described in, for example, FIG. 1 of the above-described Patent Document 1 (JP 2018-192566 A), in the conventional end mill, the groove transition portion that is disposed at the posterior end of the chip removal groove and transited to the peripheral surface of the cutting edge portion has a concave curved shape. On the other hand, in the end mill 1 according to the embodiment, the groove transition portion 10 that is disposed at the posterior end of the chip removal groove 4 and transited to the peripheral surface 3b of the cutting edge portion 3 has a linear shape. This configuration also minimizes the amount of thinning of the end mill 1. Therefore, according to the end mill 1 according to the embodiment, it is possible to stably ensure rigidity.

More specifically, in the conventional end mill, a posterior end of a first end edge 4b and a posterior end of the second end edge 4c of the chip removal groove 4 are connected in a concave curved shape by the groove transition portion. Therefore, compared to the case in which the posterior ends are connected to each other by the linear groove transition portion 10 as in the embodiment, the amount of thinning of the end mill 1 in the conventional product was large (refer to FIG. 2).

As described above, according to the embodiment, while the end mill has a small diameter, it is possible to increase the rigidity and improve the machining efficiency. For example, even when a work material with high hardness, such as high-hardness steel is cut, it is possible to achieve both ensuring of rigidity and improvement in the machining efficiency. In particular, even when the diameter dimension D of the cutting edge portion 3 is reduced to, for example, 1 mm or less, the above-described effects can be stably achieved according to the embodiment.

In the embodiment, the groove transition portion 10 extends substantially parallel to the central axis C.

In this case, the amount of thinning of the end mill 1 due to the provision of the chip removal groove 4 can be minimized, and the rigidity can be improved.

Additionally, the end mill 1 according to the embodiment has the first concave curved surface portion 41 that has a concave curved shape extending in the end mill rotation direction T as the chip removal groove 4 goes radially inward from the peripheral cutting edge 72 in the cross-sectional view perpendicular to the central axis C, the convex curved surface portion 43 that is connected to the end portion of the first concave curved surface portion 41 in the end mill rotation direction T and has a convex curved shape extending in the end mill rotation direction T in the transverse cross-sectional view, and the second concave curved surface portion 42 that is connected to the end portion of the convex curved surface portion 43 in the end mill rotation direction T and has a concave curved shape extending toward the radially outer side as the concave curved shape progresses in the end mill rotation direction T in the transverse cross-sectional view.

That is, in the embodiment, the chip removal groove 4 has the pair of concave curved surface portions (the first concave curved surface portion and the second concave curved surface portion) 41 and 42 disposed at a distance from each other in the end mill rotation direction T, and the convex curved surface portion 43 disposed between the pair of concave curved surface portions 41 and 42. Therefore, the radially inner end portions of the pair of concave curved surface portions 41 and 42 and the convex curved surface portion 43 can be disposed close to one imaginary circle VC (a circle corresponding to a center thickness of the cutting edge portion 3) centered on the central axis C in a transverse cross-sectional view perpendicular to the central axis C as shown in FIG. 5. In the embodiment, it is possible to curb a chip removal groove being formed so that a portion (a deepest portion) of the chip removal groove is more deeply indented radially inward of the cutting edge portion than other portions, as in the conventional end mills. Therefore, according to the embodiment, even while providing the chip removal groove 4, it is possible to ensure a large center thickness dimension (a diameter dimension of the above-described imaginary circle VC) W, thereby achieving both ensuring chip removal performance and stably increasing rigidity.

Specifically, when the diameter dimension D of the cutting edge portion 3 is taken as a reference (100%), in the embodiment, the center dimension W of the cutting edge portion 3 is set to 70% or more and 90% or less, and preferably 72% or more and 85% or less.

In addition, in the embodiment, in a transverse cross-sectional view perpendicular to the central axis C, a radius of curvature r3 of the convex curved surface portion 43 is larger than a radius of curvature r1 of the first concave curved surface portion 41 and is also larger than a radius of curvature r2 of the second concave curved surface portion 42.

In this case, it is easy to arrange the convex curved surface portion 43 along the circumference of the virtual circle VC. Thus, it is possible to ensure a large center thickness dimension W of the cutting edge portion 3 and stably improve rigidity.

In the embodiment, in the transverse cross-sectional view shown in FIG. 5, the convex curved surface portion 43 is disposed so as to coincide with the circumference of the imaginary circle VC that corresponds to the center thickness of the cutting edge portion 3.

In addition, in the embodiment, in the transverse cross-sectional view perpendicular to the central axis C, when a maximum amount of protrusion of the convex curved surface portion 43 from an imaginary line VL connecting radially inner ends (deepest points) of the first concave curved surface portion 41 and the second concave curved surface portion 42 in a direction perpendicular to the imaginary line VL is defined as h, a value of a ratio (h/D) of the maximum amount of protrusion h to the diameter dimension D is 1% or more and 12% or less.

When the value of the ratio (h/D) is 1% or more, a sufficient maximum amount of protrusion h of the convex curved surface portion 43 is ensured. By providing the chip removal groove 4 with the pair of concave curved surface portions (the first concave curved surface portion and the second concave curved surface portion) 41 and 42 and the convex curved surface portion 43, the above-described effect of ensuring a large center thickness of the cutting edge portion 3 is more stably achieved.

Furthermore, when the ratio (h/D) is 12% or less, it is possible to curb the maximum amount of protrusion h of the convex curved surface portion 43 becoming too large. It is possible to curb the convex curved surface portion 43 protruding too far outward in the radial direction within the chip removal groove 4, thereby curbing the chip removal performance being adversely affected.

The value of the ratio (h/D) is preferably 1.5% or more and 9% or less, and more preferably 2% or more and 6% or less.

In the embodiment, the chip removal groove 4 has the groove-shaped gash 9 disposed adjacent to the bottom cutting edge 71 in the end mill rotation direction T of the bottom cutting edge 71. Four or more gashes 9 are provided, the same number as the bottom cutting edges 71, and the radially inner end portions of the gashes 9 are connected to each other on the central axis C.

In this case, the gashes 9 disposed adjacent to each other in the end mill rotation direction T of the bottom cutting edges 71 communicate with each other via the central axis C. Thus, it is possible to increase a degree of freedom of flow of chips and coolant within the gashes 9, thereby improving the chip removal performance.

Further, in the embodiment, the diameter dimension of the shank 2 is larger than the diameter dimension D of the cutting edge portion 3, and a ratio M/D of an axial dimension M from the tip of the shank 2 to the tip of the cutting edge portion 3 to the diameter dimension D is 10 or less.

In the embodiment, as described above, an axial dimension L between the tip of the bottom cutting edge 71 and the posterior end of the chip removal groove 4, that is, a ratio L/D between the overall axial dimension L of the chip removal groove 4 and the diameter dimension D, is kept small, at 2.0 or less. Therefore, it becomes easy to keep the axial dimension M between the tip of the shank 2 and the tip of the cutting edge portion 3, that is, a ratio M/D between the so-called under-head length M and the diameter dimension D, to 10 or less. Since the ratio of the overall length dimension of the shank 2, which has a larger (thicker) outer diameter than the cutting edge portion 3 (the ratio of the axial dimension of the shank 2 to the overall length dimension in the axial direction of the end mill 1) can be secured large, rigidity can be stably increased. The M/D is preferably 8 or less, more preferably 5 or less.

In addition, in the embodiment, the four or more (multiple) peripheral cutting edges 72 include the main peripheral cutting edges 72a that are located radially outermost among these peripheral cutting edges 72, and the sub-peripheral cutting edges 72b that are disposed radially inward from the main peripheral cutting edges 72a. The main peripheral cutting edges 72a and the sub-peripheral cutting edges 72b are disposed alternately around the central axis C.

In this case, the plurality of peripheral cutting edges 72 include main peripheral cutting edges 72a and sub-peripheral cutting edges 72b that are located at different radial positions from each other. Thus, resonance during cutting is curbed, and chatter vibration is curbed. According to the end mill 1 according to the embodiment, high-precision cutting can be stably performed.

In addition, in the embodiment, a difference (D-d) between a diameter dimension D of the rotation trajectory of the main peripheral cutting edge 72a around the central axis C and a diameter dimension d of the rotation trajectory of the sub-peripheral cutting edge 72b around the central axis C is 0.04 times or less than the diameter dimension D.

When the difference (D-d) is 0.04 times or less the diameter dimension D, chatter vibrations during cutting can be stably curbed, while rigidity is ensured, as described above.

Further, in the embodiment, the rake angle of the peripheral cutting edge 72 is a negative angle, the rake angle of the bottom cutting edge 71 is a negative angle, and the rake angle of the corner cutting edge 73 is a negative angle.

In this case, the peripheral cutting edge 72, the bottom cutting edge 71 and the corner cutting edge 73 ensure large cutting edge angles, which reduces chipping and damage to the cutting edges 7. In particular, the cutting performance of the end mill 1 is maintained excellent even when a work material with high hardness such as high-hardness steel is cut.

In the embodiment, the rake angle of each of the peripheral cutting edge 72, the bottom cutting edge 71 and the corner cutting edge 73 is between -30° or more and -10° or less.

When the rake angle of each of the peripheral cutting edge 72, the bottom cutting edge 71 and the corner cutting edge 73 is -30° or more and -10° or less, chipping and damage to the cutting edges 7 can be stably curbed while the good cutting performance is maintained.

The present invention is not limited to the above-described embodiment, and modifications to the configuration are possible within the scope of the invention, as described below. In the illustration of the modified example, the same components as those in the above-described embodiment are given the same reference numerals, and the following mainly describes the differences.

In the above embodiment, the example in which the rake angle of each of the peripheral cutting edge 72, the bottom cutting edge 71 and the corner cutting edge 73 was -30° or more and -10° or less has been described, but the present invention is not limited thereto. At least one of the rake angles of the peripheral cutting edge 72, the bottom cutting edge 71, and the corner cutting edge 73 may be outside the above numerical range.

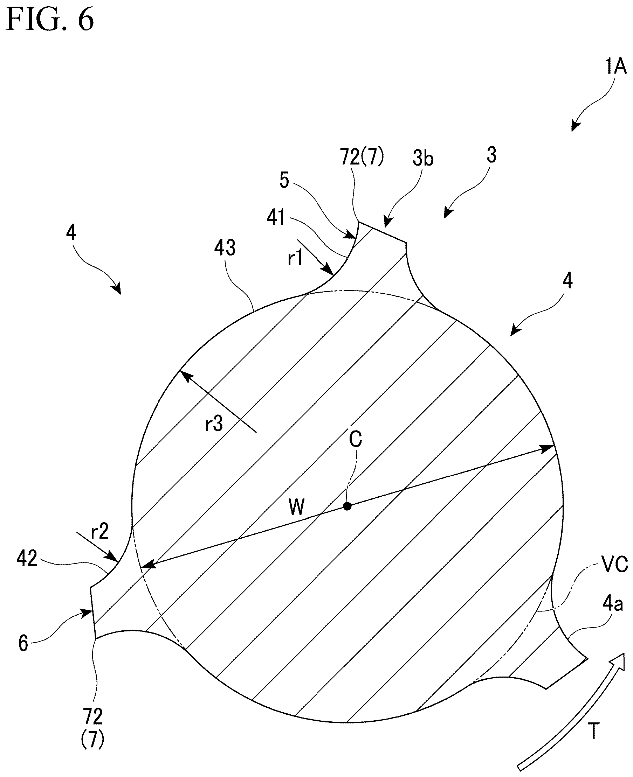

FIG. 6 is a cross-sectional view (a transverse cross-sectional view) showing a cutting edge portion 3 of an end mill 1A according to a modified example of the above-described embodiment as a cross section perpendicular to the central axis C. As shown in FIG. 6, the end mill 1A of the modified example has three sets of cutting edges 7, each set including the bottom cutting edge 71, the peripheral cutting edge 72, and the corner cutting edge 73 and spaced apart around the central axis C. The three sets cutting edges 7 are disposed at equal pitches in the circumferential direction around the central axis C. The three sets of cutting edges 7 may also be disposed at unequal pitches in the circumferential direction.

Although not specifically shown, three gashes 9 are provided, which is the same number as the bottom cutting edges 71. The radially inner end portions of the gashes 9 are connected to each other on the central axis C (refer to FIG. 4). The three peripheral cutting edges 72 include a main peripheral cutting edges 72a and a sub-peripheral cutting edge 72b (refer to FIG. 3). One of the main peripheral cutting edge 72a and the sub-peripheral cutting edge 72b is provided in one piece, and the other is provided in two pieces. The main peripheral cutting edge 72a and the sub-peripheral cutting edge 72b are disposed alternately from a predetermined position around the central axis C in the end mill rotation direction T.

The end mill 1A of the above modified example also provides the same excellent effects as the end mill 1 described in the above embodiment.

The present invention may combine the various configurations described in the above-described embodiments and variations, etc., within the scope of the spirit of the present invention, and addition, omission, substitution, and other modifications of the configurations are possible. Furthermore, the present invention is not limited to the above-described embodiments, but is limited only by the scope of the claims.

### INDUSTRIAL APPLICABILITY

According to the present invention, it is possible to provide an end mill capable of improving machining efficiency while having a small diameter and increased rigidity. Therefore, it has industrial applicability.

### REFERENCE SIGNS LIST

1, 1A End mill
2 Shank
3 Cutting edge portion
3a Tip surface
3b Peripheral surface
4 Chip removal groove
4a Wall surface
7 Cutting edge
9 Gash
10 Groove transition portion
41 First concave curved surface portion
42 Second concave curved surface portion
43 Convex curved surface portion
71 Bottom cutting edge
72 Peripheral cutting edge
72a Main peripheral cutting edge
72b Sub-peripheral cutting edge
73 Corner cutting edge
C Central axis
D, d Diameter dimension
h Maximum amount of protrusion
L, M Axial dimension
R, r1, r2, r3 Radius of curvature
T End mill rotation direction
VL Imaginary line

## Claims

1. An end mill which extends along a central axis in an axial direction,
wherein the end mill has a cutting edge portion on a tip side of the end mill,
the cutting edge portion has:
a chip removal groove configured to extend from a tip surface of the cutting edge portion toward a posterior end side in a direction opposite to an end mill rotation direction around the central axis;
a bottom cutting edge disposed on a ridge portion in which a wall surface of the chip removal groove that faces the end mill rotation direction and the tip surface of the cutting edge portion are connected;
a peripheral cutting edge disposed on a ridge portion in which the wall surface and a peripheral surface of the cutting edge portion are connected; and
a corner cutting edge having a convex curved shape and configured to connect the bottom cutting edge and the peripheral cutting edge,
four or more sets of cutting edges, each including the bottom cutting edge, the peripheral cutting edge, and the corner cutting edge, are provided at intervals around the central axis,
a diameter dimension D of a rotation trajectory of the cutting edge around the central axis is 3 mm or less,
a radially inner end of the bottom cutting edge is disposed away from the central axis in a radial direction,
a rotation trajectory of the bottom cutting edge around the central axis has a curved shape that is convex toward a tip side in a longitudinal cross section view along the central axis,
in the longitudinal cross-sectional view, a radius of curvature R of the convex curve formed by the rotation trajectory of the bottom cutting edge is larger than the diameter dimension D,
the chip removal groove has a groove transition portion that is located at a boundary between a posterior end portion of the chip removal groove and a peripheral surface of the cutting edge portion and extends linearly, and
a ratio L/D of an axial dimension L between a tip of the bottom cutting edge and the posterior end of the chip removal groove to the diameter dimension D is 2.0 or less.

2. The end mill according to claim 1, wherein the groove transition portion extends substantially parallel to the central axis.

3. The end mill according to claim 1 or 2, wherein the chip removal groove has:
a first concave curved surface portion that has a concave curved shape extending in the end mill rotation direction as the concave curved shape progresses toward a radially inner side from the peripheral cutting edge, in a transverse cross-sectional view perpendicular to the central axis;
a convex curved surface portion that is connected to an end portion of the first concave curved surface portion in the end mill rotation direction and has a convex curved shape extending in the end mill rotation direction, in the transverse cross-sectional view; and
a second concave curved surface portion that is connected to an end portion of the convex curved surface portion in the end mill rotation direction and has a concave curved shape extending toward a radially outer side as the concave curved shape progresses in the end mill rotation direction, in the transverse cross-sectional view.

4. The end mill according to claim 3, wherein, in the transverse cross-sectional view, a radius of curvature of the convex curved surface portion is larger than a radius of curvature of the first concave curved surface portion and is also larger than a radius of curvature of the second concave curved surface portion.

5. The end mill according to claim 3, wherein, in a case where a maximum amount of protrusion of the convex curved surface portion that protrudes from an imaginary line connecting radially inner ends of the first concave curved surface portion and the second concave curved surface portion in a direction perpendicular to the imaginary line is defined as h in the transverse cross-sectional view, a ratio (h/D) of the maximum amount of protrusion h to the diameter dimension D is 1% or more and 12% or less.

6. The end mill according to claim 1 or 2, wherein the chip removal groove has a groove-shaped gashes disposed adjacent to the bottom cutting edge in the end mill rotation direction of the bottom cutting edge,
a number of the gashes is four or more which is the same as a number of the bottom cutting edges, and
radially inner end portions of each of the gashes are connected to each other on the central axis.

7. The end mill according to claim 1 of 2, further comprising a shank disposed on a posterior end side of the cutting edge portion,
wherein a diameter dimension of the shank is larger than the diameter dimension D, and
a ratio M/D of an axial dimension M from a tip of the shank to a tip of the cutting edge portion to the diameter dimension D is 10 or less.

8. The end mill according to claim 1 of 2, wherein four or more peripheral cutting edges are provided,
the four or more peripheral cutting edges include main peripheral cutting edges located radially outermost among the peripheral cutting edges, and sub-peripheral cutting edges disposed radially inward with respect to the main peripheral cutting edge, and
the main peripheral cutting edges and the sub-peripheral cutting edges are disposed alternately around the central axis.

9. The end mill according to claim 8, wherein a diameter dimension of a rotation trajectory of the main peripheral cutting edges around the central axis is the diameter dimension D, and
a difference (D-d) between the diameter dimension D and a diameter dimension d of a rotation trajectory of the sub-peripheral cutting edge around the central axis is 0.04 times or less the diameter dimension D.

10. The end mill according to claim 1 or 2, wherein a rake angle of the peripheral cutting edge is a negative angle, and
a rake angle of the bottom cutting edge is a negative angle.

11. The end mill according to claim 10, wherein the rake angle of each of the peripheral cutting edge and the bottom cutting edge is -30° or more and -10° or less.

12. An end mill which extends along a central axis in an axial direction,
wherein the end mill has a cutting edge portion on a tip side of the end mill,
the cutting edge portion has:
a chip removal groove configured to extend from a tip surface of the cutting edge portion toward a posterior end side in a direction opposite to an end mill rotation direction around the central axis;
a bottom cutting edge disposed on a ridge portion in which a wall surface of the chip removal groove that faces the end mill rotation direction and the tip surface of the cutting edge portion are connected;
a peripheral cutting edge disposed on a ridge portion in which the wall surface and a peripheral surface of the cutting edge portion are connected; and
a corner cutting edge having a convex curved shape and configured to connect the bottom cutting edge and the peripheral cutting edge,
three sets of cutting edges, each including the bottom cutting edge, the peripheral cutting edge, and the corner cutting edge, are provided at intervals around the central axis,
a diameter dimension D of a rotation trajectory of the cutting edge around the central axis is 3 mm or less,
a radially inner end of the bottom cutting edge is disposed away from the central axis in a radial direction,
a rotation trajectory of the bottom cutting edge around the central axis has a curved shape that is convex toward a tip side in a longitudinal cross section view along the central axis,
in the longitudinal cross-sectional view, a radius of curvature R of the convex curve formed by the rotation trajectory of the bottom cutting edge is larger than the diameter dimension D,
the chip removal groove has a groove transition portion that is located at a boundary between a posterior end portion of the chip removal groove and a peripheral surface of the cutting edge portion and extends linearly, and
a ratio L/D of an axial dimension L between a tip of the bottom cutting edge and the posterior end of the chip removal groove to the diameter dimension D is 2.0 or less.
